# EUROPÄISCHE PATENTSCHRIFT

(11) **EP 0 407 838 B1**
(45) Veröffentlichungstag und Bekanntmachung des Hinweises auf die Patenterteilung: **03.01.1996**
(21) Anmeldenummer: 90112517.9
(22) Anmeldetag: 30.06.1990
(51) Int. Cl.: C08L 1/08

(54) **Verfahren zur Herstellung von Hydrokolloidmischungen mit verbesserter Dispergierbarkeit**
Method to produce mixtures of hydrocolloids with improved dispersibility
Procédé de production de mélanges d'hydrocolloides possédant des propriétés de dispersion modifiées

(30) Priorität: 13.07.1989 DE 3923144
(43) Veröffentlichungstag der Anmeldung: 16.01.1991
(73) Patentinhaber: Wolff Walsrode Aktiengesellschaft, D-29655 Walsrode (DE)
(72) Erfinder: Höhl, Frank, D-3044 Neuenkirchen (DE); Breckwoldt, Jörn, Dr., D-2720 Rothenburg/W (DE)
(74) Vertreter: Zobel, Manfred, Dr.

(56) Entgegenhaltungen:
- BE-A- 535 665
- DE-A- 3 103 338
- FR-A- 2 600 267
- GB-A- 1 193 650
- US-A- 4 373 959
- H.D. Graham, Food Colloids, AVI Publishing Co., Inc., Westport CT/USA 1977, 390-392

## Beschreibung

Die Erfindung betrifft ein Verfahren zur Herstellung von Hydrokolloidmischungen und verbesserte Hydrokolloidmischungen.

Viele wasserlösliche Cellulosederivate neigen beim Lösen in Wasser zum Klumpenbilden, vor allem dann, wenn sie in feinpulvriger Form vorliegen. Daher ist man gezwungen, derartige Substanzen langsam unter fortwährendem, starken Rühren oder nach vorheriger Durchfeuchtung aufzulösen. Diese Maßnahmen erfordern einen erheblichen Zeitaufwand. Oft sind diese anwendungtechnisch nicht möglich.

Seit langem ist bekannt, hochmolekulare, wasserlösliche Substanzen mit Dialdehyden zu behandeln. Dieses wird z.B. in US-A-3.072.635, US-A-3.903.076, DE-A-2 415 556 und DE-A-25 35 311 beschrieben.

Die Oberflächenbehandlung von pulverförmigen Hydrokolloiden mit Dialdehyden, vornehmlich Glyoxal, bewirkt eine vorübergehende Hydrophobierung. Dadurch lassen sie sich klumpenfrei in wäßrigen Systemen dispergieren. Nach einiger Zeit lösen sich die Partikel glatt auf, was auf die Unbeständigkeit des bei der Anwendung von relativ kleinen Mengen Glyoxal vorliegenden Halbacetals zurückzuführen ist. Die Auflösung kann durch Alkalizusatz beschleunigt werden,

Bis zum Zeitpunkt der Vernetzungsaufhebung besitzen derartige wäßrige Systeme keine wesentliche Viskosität. Dieses ist in einigen Anwendungsgebieten als nachteilig anzusehen.

Aus der US-A-4,373,959 sind Celluloseethermischungen bekannt, die sich in Wasser klumpenfrei dispergieren lassen. In dem Verfahren werden unvernetzte und glyoxalvernetzte Celluloseether trocken vermischt. Der Anteil an unvernetztem Celluloseether beträgt aber im allgemeinen weniger als 30, insbesondere weniger als 20 Gew.-%, weil sonst gemäß Spalte 6, Zeile 8ff. Verklumpungen und Agglomerationen erhalten werden.

Aus H.D. Graham, Food Colloids, AVI Publ. Comp., West Port CT, USA, 1977, S. 390-92 sind Verfahren zur Herstellung von Celluloseetherlösungen bekannt. U. a. wird hier auch die Herstellung von wasserlöslichen Dispersionen beschrieben (S. 391/392). Entscheidend dabei ist, daß der Ether in einem Träger suspendiert wird, der später wieder in einem aufwendigen Verfahren entfernt werden muß.

Der Erfindung liegt die Aufgabe zugrunde, ein verbessertes Verfahren zur Herstellung von Hydrokolloidmischungen zur Verfügung zu stellen, welches die erwähnten Nachteile nicht aufweist.

Gegenstand der Erfindung ist ein Verfahren zur Herstelstellung in Wasser dispergierbarer Hydrokolloidmischungen aus wenigstens einem unvernetzten Hydrokolloid A und wenigstens einem vernetzten Hydrokolloid B durch Mischen von A und B, dadurch gekennzeichnet, daß wenigstens eines der Hydrokolloide in einer Mischvorrichtung mit wenigstens einem Quell- oder Lösungsmittel M für das Hydrokolloid worunter Verbindungen verstanden werden, die zu einer Quellung des Hydrokolloids führen bzw. in denen die Hydrokolloide löslich sind, beaufschlagt und dann intensiv mit den restlichen Hydrokolloiden ohne Zusatz von basischen Substanzen vermischt wird und anschließend das Mittel M wieder abgezogen wird.

Die erfindungsgemäßen Mischungen lassen sich klumpenfrei in wäßrigen Systemen dispergieren. Die Zugabe des Quell- bzw. Lösemittels kann sowohl zu einer zuvor hergestellten Mischung als auch zu einer der beiden Komponenten erfolgen. Hierbei wird nach einer Einwirkungszeit die zweite Komponente als vorzugsweise trockene Substanz zugegeben. Das Quell- bzw. Lösemittel kann als erstes sowohl auf das vernetzte Hydrokolloid als auch auf das nicht vernetzte Hydrokolloid einwirken.

Unter Hydrokolloiden werden im Rahmen der vorliegenden Erfindung Polymere verstanden, die wasserlöslich sind bzw. nach Aufhebung einer Vernetzung wasserlöslich werden. Bevorzugte Hydrokolloide sind Polysaccharide. Besonders bevorzugte Hydrokolloide sind nicht ionische Celluloseether, wie Methylcellulose; Hydroxyalkylcellulosen, wie Hydroxyethylcellulose, Hydroxypropylcellulose und Hydroxyethylhydroxypropylcellulose; Hydroxyalkylmethylcellulosen, wie Hydroxypropylmethylcellulose und Hydroxyethylmethylcellulose; Hydroxyalkylcellulosen, die einen ionischen Substituenten tragen, wie Dialkylaminoalkylhydroxypropylcellulose und Carboxyalkylhydroxyalkylcellulose; wasserlösliche Salze von Cellulosehydroxycarbonsäuren, wie das Natriumsalz der Carboxymethylcellulose; natürliche Polysaccharide, wie z.B. Xanthan, und modifizierte Stärken, wie Hydroxypropylstärke.

Bevorzugt werden als unvernetzte Polysaccharidkomponente Xanthan und die wasserlöslichen Celluloseether Methylhydroxyethylcellulose, Methylhydroxypropylcellulose und Carboxymethylcellulose, besonders bevorzugt Methylhydroxyethylcellulose und Carboxymethylcellulose, eingesetzt. Als vernetzte Komponente werden bevorzugt die Celluloseether Methylhydroxyethylcellulose und Methylhydroxypropylcellulose eingesetzt. Die Vernetzung der wasserlöslichen Celluloseether erfolgt nach den bekannten Methoden mit Dialdehyden, vorzugsweise Glyoxal.

Unter Quell- bzw. Lösungsmittel werden derartige Verbindungen verstanden, die zu einer Quellung des Hydrokolloids führen bzw. in denen die Hydrokolloide löslich sind.

Als Quell- bzw. Lösemittel werden Alkohole vorzugsweise 80 %iges Methanol, 80 %iges Ethanol und Wasser, besonders bevorzugt Wasser, verwendet. Das Quell- bzw. Lösemittel wird bevorzugt in einer Menge von 10 bis 40 Gew-%, besonders bevorzugt in einer Menge von 15 bis 25 Gew.-%, eingesetzt, bezogen auf die gesamte Menge an in der Mischung vorliegenden Hydrokolloiden.

Die Beaufschlagung und intensive Vermischung der Hydrokolloide mit dem Quell- bzw. Lösemittel M muß eine intensive Durchmischung des Mittels M mit dem Hydrokolloid gewährleisten. Bevorzugte geeignete Apparaturen sind beispielsweise Kneter, Feuchtgutmischer, Granuliertrommel und Pelletierteller.

Es ist z.B. möglich, nur ein Hydrokolloid separat zu beaufschlagen, alle Hydrokolloide vor dem Mischen separat zu beaufschlagen oder die Mischung aus den Hydrokolloiden zu beaufschlagen, wobei jeweils die Beaufschlagung vor einem späteren Dispergieren der Mischung vorgenommen wird.

Die Verweilzeit in dem Mischungsaggregat ist abhängig von dem Quell- bzw. Lösemittel und von den Knetkräften, die in der verwendeten Apparatur herrschen. Bevorzugt ist eine Zeit von 15 bis 120 Min., besonders bevorzugt 30 bis 60 Min.

Mit Hilfe des beschriebenen Verfahrens lassen sich Mischungen mit bis zu 40 % an unvernetzten Hydrokolloiden herstellen, besonders bevorzugt sind Mischungen mit 25 bis 35 % an unvernetztem Hydrokolloid.

Gegenstand der Erfindung sind weiterhin verbesserte wäßrige Hydrokolloidmischungen, enthaltend im wesentlichen ein unvernetztes Hydrokolloid A und ein vernetztes Hydrokolloid B mit verbesserter Dispergierbarkeit in Wasser, dadurch gekennzeichnet, daß die Anfangsviskosität 5-15 % der Endviskosität beträgt. Diese Anfangsviskosität bildet sich innerhalb von 20 Min. durch das unvernetzte Hydrochlorid A ohne Zugabe von basischen Substanzen zur Aufhebung der Vernetzung von Hydrochlorid B.

Die Endviskosität kann nach Messung mit einem Haake Rotationsviskosimeter (2 %ig, bei 20°C und einem Schergefälle von D = 2,55 sec⁻¹) im Meßsystem MVII 1000-50.000 mPas betragen.

Derartige erfindungsgemäße Hydrokolloidmischungen werden vorzugsweise nach dem erfindungsgemäßen Verfahren erhalten.

Die nach dem Verfahren hergestellten Polysaccharidkompositionen können zusätzlich Netzmittel, Stabilisatoren, Konservierungsmittel o.ä. enthalten. Sie finden Verwendung in den Bauwerkstoffen und Anstrichmitteln, als Klebstoff bzw. Kleber und in der keramischen Industrie.

### Beispiele

Die im folgenden verwendeten Substanzen sind wie folgt charakterisiert:

Glyoxalvernetzte Methylhydroxyethylcellulose (= MHEC-PV).

Ausgegangen wird von einer Methylhydroxyethylcellulose mit folgenden Daten
- Substitutionsgrad: : DS 1,8 % - 1,9
: MS 0,4-0,5
- Viskosität Haake-Rotationsviskosimeter: : 2 %ige Lösung: 28.000-36.000 mPas

Diese Cellulose zeigt eine durch Glyoxal bedingte Verzögerungszeit von 30-50 Minuten.

### Carboxymethylcellulose (CMC)

Die Carboxymethylcellulose ist durch folgende Daten gekennzeichnet :
- Substitutionsgrad:: 0,65-0,95
- Viskosität Haake-Rotationsviskosimeter:: 28.000-35.000 mPas, 2 %ig

### Xanthan

Das Xanthan ist durch folgende Daten gekennzeichnet:
- Viskosität Haake-Rotationsviskosimeter:: 1 %ig D = 40 sec⁻¹ : 10.000 mPas

### Beispiel 1 (Erfindung)

Eine Celluloseethermischung aus 70 % glyoxalvernetzter Methylhydroxyethylcellulose und 30 % nicht vernetzter Carboxymethylcellulose wird in einen Kneter mit 30 Gew.-% 80 %igem Methanol bei laufendem Knetwerk bedüst. Dieses Material wird über einen Zeitraum von 60 Min. verknetet und anschließend bei 105°C auf eine Restfeuchte von 5 bis 7 % getrocknet. Die so hergestellte Celluloseethermischung läßt sich in Wasser klumpenfrei dispergieren.

### Vergleichsbeispiel

Dieselbe Celluloseethermischung wie in Beispiel 1 wird in einem Kneter 60 Min. trocken verknetet. Eine in Wasser gegebene Probe führte zur Verklumpung.

### Beispiele 2 bis 6 (Erfindung)

Glyoxalvernetzte Methylhydroxyethylcellulose wird mit unterschiedlichen, nicht vernetzten Polysacchariden mit verschiedenen Quell- bzw. Lösemittel in einem Kneter behandelt. Nach einer Knetdauer von 60 bis 45 Min. wird die Mischung auf eine Restfeuchte von 5 bis 7 % getrocknet. Die folgende Tabelle 1 zeigt die einzelnen Daten. Eine auf Wasser gegebene Probe sumpfte vollständig durch und ließ sich anschließend durch ein leichtes Umrühren mit dem Glasstab klumpenfrei dispergieren.

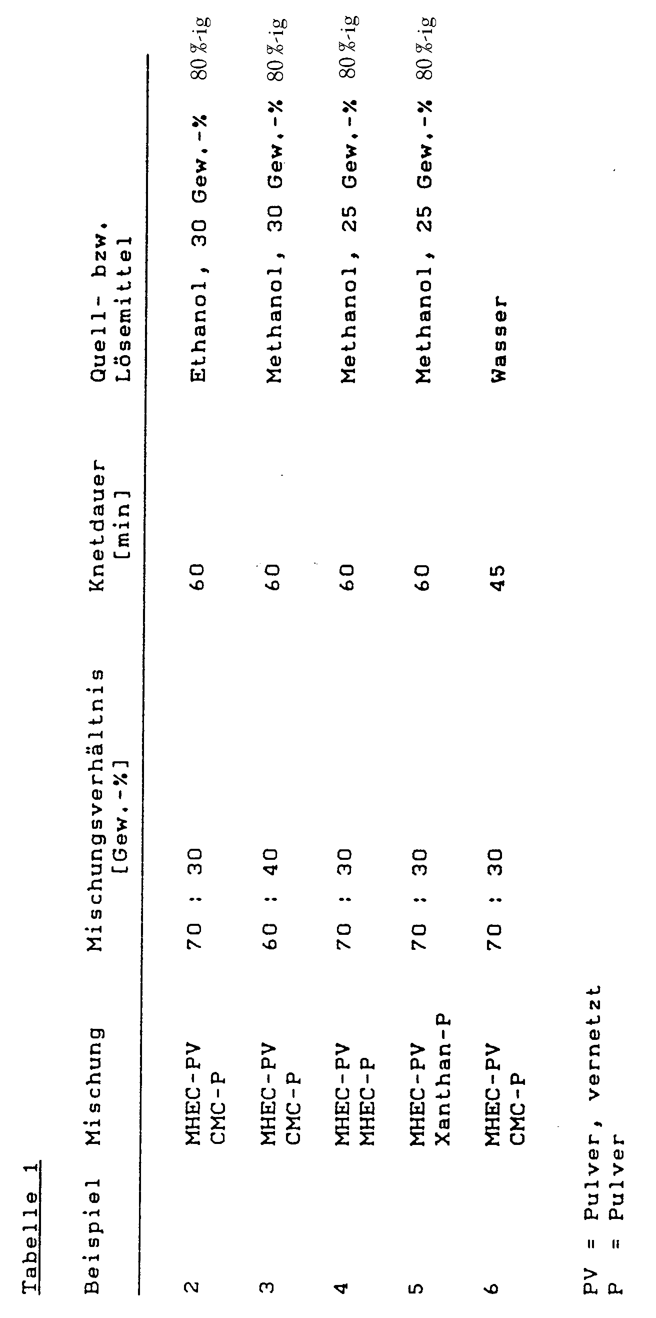

## Patentansprüche

1. Verfahren zur Herstellung in Wasser dispergierbarer Hydrokolloidmischungen aus wenigstens einem unvernetzten Hydrokolloid A und wenigstens einem vernetzten Hydrokolloid B durch Mischen von A und B, dadurch gekennzeichnet, daß wenigstens eines der Hydrokolloide in einer Mischvorrichtung mit wenigstens einem Quell- oder Lösungsmittel M für das Hydrokolloid, worunter Verbindungen verstanden werden, die zu einer Quellung des Hydrokolloids führen bzw. in denen die Hydrokolloide löslich sind, beaufschlagt und dann intensiv mit den restlichen Hydrokolloiden ohne Zusatz von basischen Substanzen vermischt wird und anschließend das Mittel M wieder abgezogen wird.

2. Verfahren gemäß Anspruch 1, dadurch gekennzeichnet, daß als Hydrokolloide Polysaccharide verwendet werden.

3. Verfahren nach wenigstens einem der vorhergehenden Ansprüche, dadurch gekennzeichnet, daß als Quell- oder Lösungsmittel M Alkohole oder Wasser verwendet werden.

4. Verfahren nach wenigstens einem der vorhergehenden Ansprüche, dadurch gekennzeichnet, daß die Konzentration des Quell- oder Lösungsmittel M, bezogen auf alle Hydrokolloide in der Hydrokolloidmischung, 10 bis 40 Gew.-% beträgt.

5. Verfahren nach wenigstens einem der vorhergehenden Ansprüche, dadurch gekennzeichnet, daß als nicht vernetztes Hydrokolloid Methylhydroxyethylcellulose, Methylhydroxypropylcellulose oder Carboxymethylcellulose verwendet wird.

6. Verfahren nach wenigstens einem der vorhergehenden Ansprüche, dadurch gekennzeichnet, daß als vernetztes Hydrokolloid Methylhydroxyethylcellulose oder Methylhydroxypropylcellulose verwendet wird.

7. Verfahren nach wenigstens einem der vorhergehenden Ansprüche, dadurch gekennzeichnet, daß die vernetzten Hydrokolloide B mit Glyoxal vernetzt sind.

8. Verfahren nach wenigstens einem der vorhergehenden Ansprüche, dadurch gekennzeichnet, daß der Anteil nicht vernetzter Hydrokolloide, bezogen auf die Summe aller Hydrokolloide, bis zu 40 Gew.-% beträgt.

9. Verwendung einer Hydrokolloidmischung, erhalten nach wenigstens einem der vorhergehenden Ansprüche, in Bauwerkstoffen, Anstrichmitteln oder Klebstoffen.

10. Hydrokolloidmischung, enthaltend im wesentlichen ein unvernetztes Hydrokolloid A und ein vernetztes Hydrokolloid B mit verbesserter Dispergierbarkeit in Wasser, erhältlich nach einem Verfahren gemäß einem der Ansprüche 1 bis 8.

## Claims

1. Process for the production of hydrocolloid mixtures dispersible in water prepared from at least one uncrosslinked hydrocolloid A and at least one crosslinked hydrocolloid B by mixing A and B, characterised in that at least one of the hydrocolloids is exposed in a mixing apparatus to at least one swelling agent or solvent M for the hydrocolloid, the swelling agent or solvent being taken to be compounds which lead to swelling of the hydrocolloid or in which the hydrocolloids are soluble, and is then vigorously mixed with the remaining hydrocolloids without the addition of basic substances and the agent M is then drawn off again.

2. Process according to claim 1, characterised in that polysaccharides are used as the hydrocolloids.

3. Process according to at least one of the preceding claims, characterised in that alcohols or water are used as the swelling agent or solvent M.

4. Process according to at least one of the preceding claims, characterised in that the concentration of the swelling agent or solvent M, relative to all the hydrocolloids in the hydrocolloid mixture, is 10 to 40 wt.%.

5. Process according to at least one of the preceding claims, characterised in that methylhydroxyethyl cellulose, methylhydroxypropyl cellulose or carboxymethyl cellulose is used as the uncrosslinked hydrocolloid.

6. Process according to at least one of the preceding claims, characterised in that methylhydroxyethyl cellulose or methylhydroxypropyl cellulose is used as the crosslinked hydrocolloid.

7. Process according to at least one of the preceding claims, characterised in that the crosslinked hydrocolloids B are crosslinked with glyoxal.

8. Process according to at least one of the preceding claims, characterised in that the proportion of uncrosslinked hydrocolloids, relative to the sum of all hydrocolloids, is up to 40 wt.%.

9. Use of a hydrocolloid mixture obtained according to at least one of the preceding claims in construction materials, coatings or adhesives.

10. Hydrocolloid mixture substantially containing an uncrosslinked hydrocolloid A and a crosslinked hydrocolloid B with improved dispersibility in water, obtainable using a process according to one of claims 1 to 8.

## Revendications

1. Procédé de production de mélanges d'hydrocolloïdes dispersables dans l'eau, formés d'au moins un hydrocolloïde A non réticulé et d'au moins un hydrocolloïde B réticulé, par mélange de A et B, caractérisé en ce qu'on charge au moins l'un des hydrocolloïdes dans un dispositif mélangeur avec au moins un agent M faisant gonfler ou dissolvant l'hydrocolloïde, c'est-à-dire des composés qui mènent à un gonflement de l'hydrocolloïde ou dans lesquels les hydrocolloïdes sont solubles, puis on mélange énergiquement avec les hydrocolloïdes restants sans addition de substances basiques et on chasse ensuite l'agent M.

2. Procédé suivant la revendication 1, caractérisé en ce qu'on utilise des polysaccharides comme hydrocolloïdes.

3. Procédé suivant l'une au moins des revendications précédentes, caractérisé en ce qu'on utilise des alcools ou l'eau comme agent gonflant ou solvant M.

4. Procédé suivant l'une au moins des revendications précédentes, caractérisé en ce que la concentration de l'agent gonflant ou du solvant M s'élève à 10-40 % en poids, par rapport à tous les hydrocolloïdes présents dans le mélange d'hydrocolloïdes.

5. Procédé suivant l'une au moins des revendications précédentes, caractérisé en ce qu'on utilise comme hydrocolloïde non réticulé la méthylhydroxyéthylcellulose, la méthylhydroxypropylcellulose ou la carboxyméthylcellulose.

6. Procédé suivant l'une au moins des revendications précédentes, caractérisé en ce qu'on utilise comme hydrocolloïde réticulé la méthylhydroxyéthylcellulose ou la méthylhydroxypropylcellulose.

7. Procédé suivant l'une au moins des revendications précédentes, caractérisé en ce que les hydrocolloïdes réticulés B sont réticulés avec du glyoxal.

8. Procédé suivant l'une au moins des revendications précédentes, caractérisé en ce que la proportion d'hydrocolloïdes non réticulés, par rapport à la somme de tous les hydrocolloïdes, s'élève jusqu'à 40 % en poids.

9. Utilisation d'un mélange d'hydrocolloïdes, obtenu suivant l'une au moins des revendications précédentes, dans des matériaux de construction, des produits d'enduction ou des adhésifs.

10. Mélange d'hydrocolloïdes, contenant principalement un hydrocolloïde A non réticulé et un hydrocolloïde B réticulé doués d'une très bonne dispersibilité dans l'eau, pouvant être obtenu par un procédé suivant l'une des revendications 1 à 8.
